# EUROPÄISCHE PATENTSCHRIFT

(11) **EP 1 223 698 B1**
(45) Veröffentlichungstag und Bekanntmachung des Hinweises auf die Patenterteilung: **24.01.2007**
(21) Anmeldenummer: 01440417.2
(22) Anmeldetag: 10.12.2001
(51) Int. Cl.: H04J 3/06, H04L 7/00, H04Q 11/04

(54) **Verfahren und Kompensationsmodul zur Phasenkompensation von Taktsignalen**
Method and compensation module for phase compensation of clock signals
Procédé et module de compensation de phase des signaux d'horloge

(30) Priorität: 23.12.2000 DE 10064929
(43) Veröffentlichungstag der Anmeldung: 17.07.2002
(73) Patentinhaber: ALCATEL, 75008 Paris (FR)
(72) Erfinder: Wolf, Dr., Michael Joachim, 74395 Mundelsheim (DE); Höhn, Jürgen, 74232 Abstatt (DE); Beisel, Werner, 71638 Ludwigsburg (DE)
(74) Vertreter: Urlichs, Stefan

(56) Entgegenhaltungen:
- US-A- 4 019 143
- US-A- 4 868 514
- US-A- 5 550 514
- US-A- 5 570 397

## Beschreibung

Die vorliegende Erfindung betrifft ein Verfahren gemäß dem Oberbegriff des Anspruchs 1 sowie ein Kompensationsmodul zur Phasenkompensation zwischen mindestens einem ersten Taktsignal und einem zweiten Taktsignal, die dem Kompensationsmodul in einem Netzknoten eines Telekommunikationsnetzes übermittelt werden.

Auf den Gebieten der Telekommunikation und der Computertechnik können die betriebsnotwendigen Baugruppen eines Gerätes häufig nicht auf einer Elektronik-Platine angeordnet werden, sondern müssen auf mehrere separate Module auf jeweils einer oder mehreren Platinen verteilt werden. Gerade bei Telekommunikationssystemen werden aus Gründen der Ausfallsicherheit zudem auch redundante Module eingesetzt. Damit die Module synchron arbeiten, empfangen die Module ein zentrales, auch als "Clock-Signal" bezeichnetes Taktsignal, das beispielsweise von einem zentralen Taktgeber-Modul erzeugt und z.B. über einen Clock-Kanal eines Busses an die Module übertragen wird. Die Module arbeiten dann entweder unmittelbar mit dem von dem Bus abgegriffenen Taktsignal oder synchronisieren beispielsweise einen eigenen, auf dem jeweiligen Modul vorgesehenen lokalen Taktgeber auf das zentrale Taktsignal.

Bei einem redundant ausgelegten System wird ein Modul jedoch nicht nur mit einem Taktsignal, sondern mit zumindest einem zweiten Taktsignal versorgt. Selbst wenn man davon ausgeht, dass die beiden Taktsignale an ihrer Quelle synchron sind, beispielsweise von optimal aufeinander synchronisierten Taktgebern stammen oder beide von demselben Taktgeber stammen, kommt es bei unterschiedlich langen Übertragungswegen für die Taktsignale, beispielsweise aufgrund unterschiedlich langer Kabel, zu Phasendifferenzen, wenn die beiden Taktsignale bei dem als Taktsignal-Senke operierenden Modul ankommen. Das Modul kann dann nicht ohne einen Phasensprung zwischen den Taktsignalen hin- und herschalten, wenn z.B. eines der Taktsignale ausfällt.

Dem könnte man zwar dadurch begegnen, dass man die jeweiligen Übertragungswege jeweils gleich lang bemisst, z.B. gleich lange Kabel verwendet. Bei komplexeren, räumlich weit voneinander entfernten Systemen wird dadurch der Aufwand bei Aufbau und Wartung der Systeme jedoch beträchtlich. Soll eine präzise Synchronisierung ohne Phasendifferenzen bei räumlich voneinander entfernten Netzwerkeinrichtungen eines Telekommunikationsnetzes durchgeführt werden, kann im Allgemeinen auf die Länge der Übertragungswege für die jeweiligen Taktsignale gar kein, im Einzelfall allenfalls geringer Einfluss genommen werden. Verschärft wird das Problem zudem noch, wenn die redundanten Taktsignale bereits an der Taktsignalquelle nicht exakt synchron sind.

Bei hochpräzisen und mit hoher Taktfrequenz arbeitenden Netzwerkeinrichtungen von Telekommunikationsnetzen, beispielsweise bei sogenannten Cross-Connects in der SDH-Übertragungstechnik (SDH = Synchronous Digital Hierarchy), haben jedoch bereits sehr geringe Phasenverschiebungen zwischen Taktsignalen oder sogenannten Rahmen-Taktsignalen einen störenden Einfluss auf die Präzision der Netzwerkeinrichtung. Die Module einer Netzwerkeinrichtung, bei denen es sich beispielsweise um I/O-Baugruppen (I/O = Input/Output) oder Schaltmatrizen handelt, arbeiten dann nicht mehr ausreichend synchron und es kommt z.B. zu Datenüberholungen oder -überschneidungen bei Nachrichten, die die Module der Netzwerkeinrichtung durchlaufen.

Dieselbe Problematik ergibt sich auch in einem Telekommunikationsnetz, wenn Netzwerkeinrichtungen aus Redundanzgründen mit mehr als einem Taktsignal synchronisiert werden.

Das US-Patent 5,570,397 betrifft redundante synchronisierte Taktsignalcontroller. Dabei stellen Oszillatoren redundante Taktsignale bereit, die ein Phasendetektor miteinander vergleicht und ein Vergleichssignal einem Synchronisierer übermittelt. Ein dem jeweiligen Taktsignal zugeordneter Synchronisierer synchronisiert daraufhin das Taktsignal. Beispielsweise verzögert er ein erstes Taktsignal, damit ein zweites Taktsignal aufholen kann oder umgekehrt. Somit erfüllt der Synchronisierer die Funktion eines Verzögerungsmittels, der eine Verzögerung für eine Phasenkorrektur durchführt.

Es ist daher Aufgabe der vorliegenden Erfindung, ein verbessertes Verfahren sowie ein Kompensationsmodul zur Phasenkompensation von Phasendifferenzen zu schaffen, die zwischen mindestens einem ersten und einem zweiten dem Kompensationsmodul übermittelten Taktsignal auftreten.

Diese Aufgabe wird gelöst durch ein Kompensationsmodul gemäß der technischen Lehre des Anspruchs 1 sowie ein Verfahren gemäß der technischen Lehre des Anspruchs 15.

Der Erfindung liegt dabei der Gedanke zugrunde, dass das Kompensationsmodul das mindestens eine erste Taktsignal um eine vorbestimmte erste Verzögerungsdauer zu einem verzögerten ersten Taktsignal verzögert und das zweite Taktsignal um eine vorbestimmte zweite Verzögerungsdauer zu einem verzögerten zweiten Taktsignal. Das Kompensationsmodul adaptiert dann die zweite Verzögerungsdauer, so dass das verzögerte zweite Taktsignal an die Phase des verzögerten ersten Taktsignals angepasst ist.

Die erste Verzögerungsdauer ist sozusagen eine Grundverzögerung, mit der vermieden wird, dass das zweite, gegebenenfalls mit einer geringfügigen geringen Phasendifferenz bei dem Kompensationsmodul ankommende Taktsignal um fast eine gesamte Taktpulslänge, oder im Falle eines sogenannten Rahmen-Taktsignals, um fast eine gesamte Rahmenlänge verzögert werden muss. Ferner adaptiert sich das Kompensationsmodul an die jeweiligen Phasendifferenzen von selbst, so dass z.B. innerhalb von durch die jeweilige individuelle Ausgestaltung des Kompensationsmoduls definierter Grenzen beliebig lange Übertragungswege für die Taktsignale gewählt werden können. Man ist also z.B. nicht mehr auf Kabel gleicher Länge zur Übertragung der Taktsignale fixiert, sondern kann z.B. für das erste Taktsignal ein kurzes, beispielsweise 20 Zentimeter langes Kabel, und für das zweite Taktsignal ein langes, z.B. 200 Meter, langes Kabel verwenden.

Die Erfindung kann vorteilhaft in einem beliebigen System mit redundanter Taktverteilung eingesetzt werden. Bei dem System kann es sich um ein einzelnes Gerät handeln oder beispielsweise auch um ein Kommunikationsnetz. In einer besonders bevorzugten Ausführungsform wird die Erfindung in einem Übertragungsnetzwerk, insbesondere einem Übertragungsnetzwerk mit synchroner digitaler Hierarchie (SDH), oder in einer Netzwerkeinrichtung des Übertragungsnetzwerks eingesetzt, beispielsweise in einem Cross-Connect eines SDH-Übertragungsnetzwerks. Die Erfindung kann vorteilhaft auch in einer SONET-Netzwerkeinrichtung (SONET = Synchronous Optical Network) oder in einer PDH-Netzwerkeinrichtung (PDH = plesiosynchrone digitale Hierarchie) angewandt werden.

Bei erfindungsgemäßen Kompensationsmodulen handelt es sich beispielsweise um Ein-/Ausgangsmodule oder Schaltmatrizen-Module einer Netzwerkeinrichtung, bei denen jedenfalls eine präzise Synchronisation zu einem reibungslosen Zusammenwirken untereinander oder mit weiteren, mit den Taktsignalen synchronisierter Vorrichtungen erforderlich ist. Es ist auch möglich, dass ein Netzknoten eines Telekommunikationsnetzes, beispielsweise eine Vermittlungsstelle oder ein Cross-Connect ein erfindungsgemäßes Kompensationsmodul bildet und gegebenenfalls weitere Komponenten, beispielsweise ein Koppelnetzwerk oder dergleichen, aufweist.

Die Verzögerungsdauer für das erste Taktsignal wird z.B. gemäß einer maximal zu erwartenden Phasendifferenz zwischen dem ersten Taktsignal und dem zweiten Taktsignal vorbestimmt. Dazu sind dem ersten Taktsignal zugeordnete Verzögerungsmittel zweckmäßigerweise derart bemessen, dass sie das Taktsignal um zumindest eine der maximal zu erwartenden Phasendifferenz entsprechende Verzögerungsdauer verzögern können. Beispielsweise hat ein als Verzögerungsmittel dienendes Schieberegister eine an die erste Verzögerungsdauer angepasste Speichertiefe. Die Phasendifferenz ergibt sich beispielsweise durch Laufzeitdifferenzen bei unterschiedlich langen Übertragungswegen, die zur Übertragung der beiden Taktsignale verwendet werden. Bei dem obigen Beispiel wäre dann eine Laufzeitdifferenz und eine dementsprechende Phasendifferenz für ein Kabel von annähernd 200 Metern zu kalkulieren.

Für die zweite Verzögerungsdauer wird ein Startwert gewählt, welcher der ersten Verzögerungsdauer entspricht. Es wird also eine der maximal zu erwartenden

Phasendifferenz entsprechende Verzögerungsdauer eingestellt, wobei prinzipiell auch andere Startwerte möglich sind. Bei der anschließenden Anpassung der zweiten Verzögerungsdauer, kann diese einerseits bis zum Wert "0" verringert werden, wenn nämlich das zweite Taktsignal gegenüber dem ersten Taktsignal um die besagte Phasendifferenz nachlaufend von dem Kompensationsmodul empfangen wird. Andererseits kann die zweite Verzögerungsdauer auch das Doppelte der ersten Verzögerungsdauer betragen, wenn nämlich das zweite Taktsignal gegenüber dem ersten Taktsignal um die besagte Phasendifferenz vorauseilend von dem Kompensationsmodul empfangen wird.

Dementsprechend sind die dem zweiten Taktsignal zugeordneten Verzögerungsmittel im Unterschied zu den dem ersten Taktsignal zugeordneten ersten Verzögerungsmittel zweckmäßigerweise mindestens derart bemessen, dass sie das zweite Taktsignal um zumindest das Doppelte einer der maximal zu erwartenden Phasendifferenz zwischen den beiden Taktsignalen entsprechenden Verzögerungsdauer verzögern können. Beispielsweise hat dann ein als zweites Verzögerungsmittel dienendes Schieberegister eine doppelte Speichertiefe im Vergleich zu dem oben erwähnten, als erstes Verzögerungsmittel dienenden Schieberegister.

Es versteht sich, dass die obigen Angaben zu den Verzögerungsmitteln jeweils zweckmäßige Mindestgrößen sind und dass im Sinne einer universellen Verwendbarkeit beide Verzögerungsmittel gleichartig aufgebaut sein können.

Prinzipiell kann es für bei dem Kompensationsmodul ankommende Taktsignale vorbestimmt sein, z.B. durch eine per Verkabelung festgelegte Zuordnung, welches der Taktsignale das erste und welches das zweite Taktsignal im Sinne der erfindungsgemäßen Vorgehensweise ist.

Zweckmäßigerweise verfügt das Kompensationsmodul jedoch über Auswahlmittel, mit denen es je eines der Taktsignale als das erste und eines als das zweite Taktsignal auswählen kann. Vorteilhafterweise dient das ausgewählte Taktsignal zur Synchronisierung des Kompensationsmoduls.

Vorteilhaft wird z.B. das jeweils vorauseilende Taktsignal als das erste Taktsignal ausgewählt.

Es ist auch möglich, dass dem Kompensationsmodul durch eine ihm übermittelte Master-Slave-Statusinformation von extern vorgegeben wird, welches der Taktsignale als ein Master-Synchronisationssignal zur Synchronisierung des Kompensationsmoduls auszuwählen ist. Die Master-Slave-Statusinformation kann beispielsweise sozusagen als "In-Band"-Kennung in jedes Taktsignal oder beispielsweise auch nur in das als "Master" auszuwählende Taktsignal eingefügt sein. Die Master-Slave-Statusinformation kann dem Kompensationsmodul auch über von den Taktsignalen separate Steuerdaten übermittelt werden. Jedenfalls sind die Empfangsmittel zum Empfangen der Master-Slave-Statusinformation geeignet und die Auswahlmittel zweckmäßigerweise derart ausgestaltet, dass das Kompensationsmodul in Abhängigkeit von der Master-Slave-Statusinformation das mindestens eine erste Taktsignal oder das zweite Taktsignal als ein Master-Synchronisationssignal zu seiner Synchronisierung auswählen kann.

Das jeweils als Master-Synchronisationssignal ausgewählte Taktsignal dient zweckmäßigerweise auch als das ersten Verzögerungsmitteln zugeordnete erste Taktsignal.

Prinzipiell könnte die Phasenjustierung nach verschiedenen Methoden erfolgen. Dabei wird vorteilhaft die jeweilige Phasendifferenz zwischen den von den Verzögerungsmitteln bereitgestellten, verzögerten Taktsignalen gemessen und anschließend die zweite Verzögerungsdauer an die jeweils ermittelte Phasendifferenz angepasst. Dabei ist beispielsweise eine kontinuierliche Regelung oder auch die Anwendung einer sogenannten Fuzzy Logic denkbar. Zweckmäßigerweise wird bei der Phasenjustierung schrittweise vorgegangen, bei der digitale Bauteile und/oder eine als Software realisierte Regelung eingesetzt werden können.

Bei der schrittweisen Phasenjustierung könnte die zweite Verzögerungsdauer prinzipiell in konstanter Schrittweise geändert werden, wobei die ermittelte Phasendifferenz im Grunde mit zwei Werten für regelungstechnische Zwecke ausreichend definiert ist: "zweites Taktsignal eilt erstem Taktsignal voraus" oder "zweites Taktsignal läuft erstem Taktsignal nach". Ein dritter Wert "erstes und zweites Taktsignal sind gleichphasig" bringt einen Vorteil in Bezug auf die Reglerruhe.

Als besonders vorteilhaft hat es sich erwiesen, zur Phasenjustierung die zweite Verzögerungsdauer in dynamischen Schrittweiten zu ändern, wobei die jeweilige Schrittweite in Abhängigkeit von einem jeweiligen Phasendifferenz zwischen den ausgangseitig an den Verzögerungsmitteln anstehenden verzögerten Taktsignalen modifiziert wird. Bei einer großen Phasendifferenz ist die Schrittweite groß, bei einer kleineren Phasendifferenz entsprechend kleiner. Zweckmäßigerweise wird die zweite Verzögerungsdauer bei lediglich sehr kleinen, gegen "0" tendierenden Werten der Phasendifferenz nicht modifiziert. Zu den obigen drei Werten für die Phasendifferenz kommen vorteilhaft zwei weitere hinzu: "zweites Taktsignal eilt erstem Taktsignal weit voraus" oder "zweites Taktsignal läuft erstem Taktsignal weit nach". Jedenfalls wird somit einerseits eine schnelle Verringerung der Phasendifferenz erzielt und andererseits eine große Stabilität und Ruhe der Regelung.

Insbesondere bei mehrfachem Hin- und Herschalten zwischen dem ersten und der zweiten Taktsignal, bei dem die Phase des jeweils nicht ausgewählten Taktsignals an die Phase des ausgewählten Taktsignals angepasst werden muss, tritt ein sogenannter Creeping-Effekt auf. Dabei verlängern oder verkürzen sich die dem ersten und der zweiten Taktsignal jeweils zugeordneten ersten bzw. zweiten Verzögerungsdauern gleichsinnig, so dass möglicherweise letztlich die ersten und zweiten Verzögerungsmittel die jeweiligen ersten bzw. zweiten Verzögerungsdauern, die zu einer Phasenkompensation notwendig sind, nicht mehr einstellen können. Im vorgenannten Beispiel wäre z.B. die Speicherkapazität der Schieberegister nicht mehr ausreichend. Der Creeping-Effekt führt insbesondere bei sehr langfristig betriebenen Anlagen, die beispielsweise über viele Jahre durchgehend in Betrieb sind, zu Problemen. Auch von gegebenenfalls durch die ersten und zweiten Taktsignale versorgte Einheiten, bei denen Phasenkompensationsmittel vorgesehen ist, könnten beispielsweise aus Kapazitätsgründen von deren Phasenkompensationsmittel eine an sich notwendige Phasenkompensation nicht durchführen. Zudem wird mit zunehmender erster bzw. zweiter Verzögerungsdauer die Gesamtlaufzeit des ersten bzw. zweiten Taktsignals in unerwünschter Weise verlängert.

Dem wird in einer bevorzugten Variante der Erfindung dadurch begegnet, dass die Justiermittel zu einer bevorzugten Einstellung der ersten Verzögerungsdauer und/oder der zweiten Verzögerungsdauer auf einen vorbestimmten und/oder jeweils bei einem Anlauf des Kompensationsmoduls ermittelten ersten bzw. zweiten Startwert ausgestaltet sind, wobei eine die Abweichung der ersten Verzögerungsdauer bzw. der zweiten Verzögerungsdauer von ersten bzw. zweiten Startwert vergrößernde Modifikation der ersten Verzögerungsdauer bzw. der zweiten Verzögerungsdauer erst bei Erreichen eines vorbestimmten ersten Abweichungstoleranzwertes durchgeführt wird, in umgekehrter Richtung bei Erreichen eines zweiten, im Vergleich zu dem ersten Abweichungstoleranzwert kleineren Abweichungstoleranzwertes.

Im obigen Beispiel ist beispielsweise ein der ersten Verzögerungsdauer entsprechender erster Startwert zur Abtastung des als erstes Verzögerungsmittel dienenden Schieberegisters maßgeblich. Dieser kann z.B. ein vorbestimmter Startwert sein oder beim ersten Hochlauf des Kompensationsmoduls ermittelt werden. Anschließend wird das ausgangseitig an den zweiten Verzögerungsmitteln anstehende verzögerte zweite Taktsignal an die Phase des ausgangseitig an den ersten Verzögerungsmitteln anstehenden, verzögerten mindestens einen ersten Taktsignals angepasst. Beispielsweise bei einer Störung des ersten Taktsignals wird auf das zweite Taktsignal umgeschaltet. Sofern das erste Taktsignal später aber wieder verfügbar ist, wird dessen Phase an die Phase des nunmehr ausgewählten zweiten Taktsignals angepasst. Dabei orientiert sich das Kompensationsmodul an dem ursprünglich eingestellten ersten Startwert für das erste Verzögerungsmittel. Wenn zur Korrektur einer Phasenabweichung des ersten Taktsignals der Referenzwert zur Abtastung des als erstes Verzögerungsmittel dienenden Schieberegisters in Richtung zu einer größeren Abweichung von dem ersten Startwert modifiziert werden müsste, muss diese Phasenabweichung verhältnismäßig groß sein. In umgekehrter Richtung hingegen, bei einer Änderung des Referenzwertes hin zu dem ersten Startwert, wird der Referenzwert bereits bei kleinen Phasenabweichungen modifiziert. Somit wird für die Phasenkompensation sozusagen eine Vorzugsrichtung in Richtung des ersten Startwertes definiert.

Es versteht sich, dass dieses Verfahren sinngemäß auch für einen den zweiten Verzögerungsmittel zugeordneten Startwert anwendbar ist. Als zweiter Startwert dient dann vorzugsweise derjenige Wert der zweiten Verzögerungsdauer, der bei der erstmaligen Phasenjustierung der zweiten Verzögerungsmittel beim Hochlauf des Kompensationsmoduls ermittelt worden ist.

Das erfindungsgemäße Kompensationsmodul kann auch als Software-Modul oder Programm-Modul ausgebildet sein, dessen Programmcode von einem geeigneten Steuermittel, beispielsweise einem digitalen Signalprozessor, ausgeführt werden kann.

Es versteht sich, dass im Sinne der Erfindung auch mehr als zwei Taktsignale behandelt werden können. Bei der Bestimmung der Verzögerungsdauern sowie bei der Auslegung der Verzögerungsmittel wird dann beispielsweise eine maximale Phasendifferenz zugrundegelegt, die zwischen dem in Bezug auf die Phase als erstem und dem als letzten bei dem Kompensationsmodul ankommenden Taktsignal auftreten kann. Geht man von einer Auslegung des Kompensationsmoduls anhand verschieden langer Übertragungswege für die Taktsignale aus, beispielsweise verschieden langer Übertragungskabel, kann man die Verzögerungsmittel gemäß einer zwischen dem längsten und dem kürzesten Kabel auftretenden Übertragungszeitdifferenz auslegen, oder - noch einfacher - gemäß der bei Verwendung des längsten Kabels auftretenden Übertragungszeit.

Im Folgenden werden die Erfindung und ihre Vorteile anhand eines Ausführungsbeispiels unter Zuhilfenahme der Zeichnung dargestellt. Es zeigen:

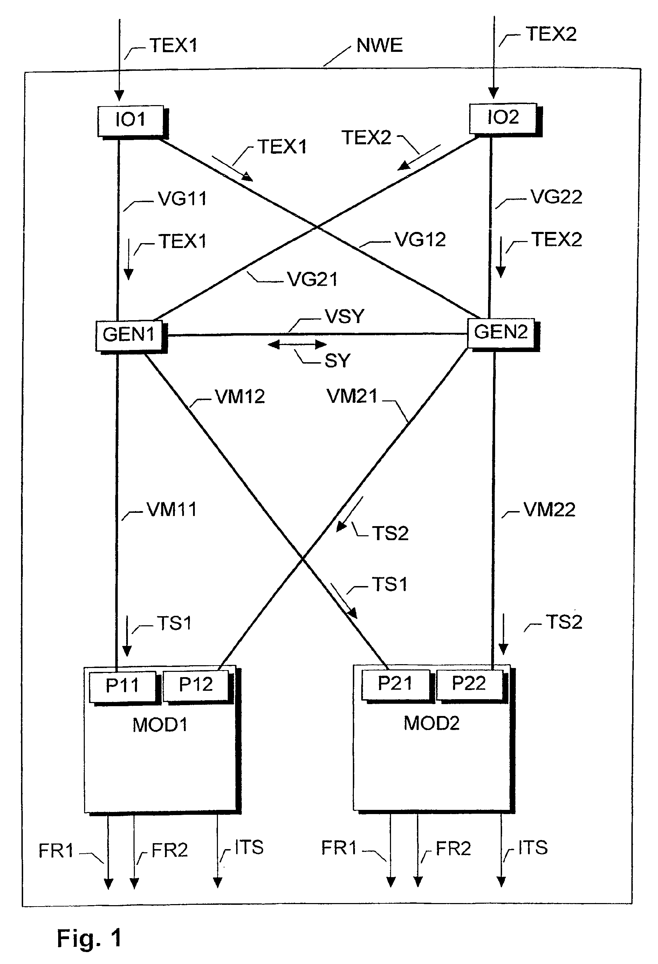

- Figur 1: eine beispielhafte Anordnung zur Ausführung des erfindungsgemäßen Verfahrens mit in einer erfindungsgemäßen Netzwerkeinrichtung NWE, die erfindungsgemäße Kompensationsmodule MOD1, MOD2 und Taktgebermodule GEN1, GEN2, aufweist,
- Figur 2 Figuren 3a, 3b: eine schematische Ansicht des Kompensationsmoduls MOD1, die schematische Laufzeitdiagramme für Taktsignale TS1, TS2, gemäß einer Verarbeitung durch das Kompensationsmodul MOD1 aus den Figuren 1, 2, und
- Figur 4: eine Auswertung von Phasendifferenzen zwischen den Taktsignalen TS1, TS2 aus den Figuren 3a, 3b

Eine Netzwerkeinrichtung NWE enthält Kompensationsmodule MOD1, MOD2, die durch Taktgebermodule GEN1, GEN2 mit Taktsignalen TS1, TS2 versorgt werden. Die Taktsignale TS1, TS2 sind, abgesehen von eventuellen Phasendifferenzen, zueinander redundante Taktsignale, von denen die Kompensationsmodule MOD1, MOD2 eines als Master-Synchronisationssignal zu ihrer Synchronisation auswählen.

Bei der Netzwerkeinrichtung NWE handelt es sich um einen Netzknoten eines Übertragungsnetzwerkes, z.B. einen Cross-Connect eines SDH-Übertragungsnetzwerkes. Die Netzwerkeinrichtung NWE empfängt Daten, z.B. sogenannte SDH-Rahmen, mittels als Empfangsmittel dienender sogenannter I/O-Ports IO1, IO2 (I/O = Input/Output) auf nicht dargestellten Übertragungswegen, die z.B. auf SDH-Übertragungsleitungen vorgesehen sind. Die Daten, z.B. die SDH-Rahmen, umfassen zum Einen Nutzdaten (Payload) und zum Anderen Steuerdaten, die z.B. in ihrem sogenannten Overhead enthalten sind und vorliegend (externe) Taktsignale TEX1, TEX2 enthalten. Die Taktsignale TEX1, TEX2 könnten beispielsweise auch aus der Übertragungsrate und/oder der Struktur der an den I/O-Ports IO1, IO2 empfangenen Daten ermittelt werden oder auf nicht dargestellten separaten Taktsignalleitungen von der Netzwerkeinrichtung NWE empfangen werden. Die I/O-Ports IO1, IO2 sind z.B. als integrierte Schaltkreise realisierte Ein-/Ausgangsmodule, die z.B. auf einer Schnittstellenkarte angeordnet sind.Die I/O-Ports IO1, IO2 sind z.B. als integrierte Schaltkreise realisierte Ein-/Ausgangsmodule, die z.B. auf einer Schnittstellenkarte angeordnet sind.

Die Taktgebermodule GEN1, GEN2 sind vorliegend als zueinander redundante Taktgebermodule ausgeführt und können beispielsweise auf einem zentralen Steuerungsboard oder Steuerungsrechner der Netzwerkeinrichtung NWE oder jeweils auf einem separaten Board angeordnet sein.

Bei den zu synchronisierenden Kompensationsmodulen MOD1, MOD2 handelt es sich beispielsweise um Ein-/Ausgangsbaugruppen, Schaltmatrizen oder Stufen davon oder um sonstige Module, die für einen reibungslosen Betrieb der Netzwerkeinrichtung NWE synchron arbeiten müssen.

Vom I/O-Port IO1 wird das (externe) Taktsignal TEX1 über Verbindungen VG11, VG12 an die Taktgebermodule GEN1, GEN2 übermittelt und vom I/O-Port IO2 wird das Taktsignal TEX2 über Verbindungen VG21, VG22 an die Taktgebermodule GEN1, GEN2 übertragen. Die Taktgebermodule GEN1, GEN2 wählen dasjenige der Taktsignale TEX1, TEX2 aus, das die jeweils beste Taktqualität aufweist. Die jeweilige Taktqualität ist beispielsweise als sogenannte "Synchronisation Status Message" (SSM) in SDH-Rahmen enthalten und kann somit von den I/O-Ports IO1, IO2 und/oder den Taktgebermodulen GEN1, GEN2 ermittelt werden. Nach den SDH-Standards des ETSI (= European Telecommunications Standards Institute kann die SSM in absteigender Qualitätsreihenfolge z.B. die Bedeutungen "Primary Reference Clock, "Transit Node", "Local Node", "SDH Equipment Clock" und "Do not use" aufweisen. Diese und weitere Synchronisation Status Messages (SSMs) für SDH- und SONET-Übertragungsnetze sind durch die ITU (International Telecommunication Union) standardisiert.

Aus den sozusagen als Grund-Taktsignale dienenden Taktsignalen TEX1, TEX2 erzeugen die Taktgebermodule GEN1, GEN2 mittels nicht dargestellter Taktgenerierungsmitteln, beispielsweise mit sogenannten Phase Locked Loops (PLL), die Taktsignale TS1, TS2, die vorliegend sogenannte Rahmen-Taktsignale sind und mit einer Bitrate von 2 Megabit pro Sekunde übertragen werden. Die Rahmen-Taktsignalen TS1, TS2 enthalten mehrere Basis-Rahmen, die zyklisch wiederholt werden, beispielsweise mit einer Frequenz von 8 Kiloherz (kHz), und die an sich schon als Taktsignale dienen. Die z.B. mit 8 kHz zyklisch gesendeten Basis-Rahmen enthalten Qualitätskennungen sowie weitere Synchronisationssignale oder -rahmen, beispielsweise ein 1-Hz-Taktsignal. Bei dem 1 Hz-Taktsignal kann es sich z.B. um ein Bit im Basis-Rahmen handeln, das alle 500 Millisekunden zwischen den Werten "0" und "1" wechselt. Die Qualitätskennungen sind z.B. einzelne Bits oder Bitfolgen und umfassen vorliegend eine Master-Slave-Statusinformation MSX sowie gegebenenfalls weitere Kennungen, z.B. die oben erläuterte und von den I/O-Ports IO1, IO2 an die Taktgebermodule GEN1, GEN2 gesendete SSM-Kennung oder von den I/O-Ports 101, 102 und/oder den Taktgebermodulen GEN1, GEN2 eingefügte Identifizierungskennungen, anhand derer eventuelle Verkabelungsfehler zwischen den Modulen der Netzwerkeinrichtung NWE ermittelt und behoben werden können.

Die Taktgebermodule GEN1, GEN2 synchronisieren sich vorliegend gegenseitig, wobei sie sich über eine Verbindung VSY als Synchronisationssignale dienende Synchronisationsdaten SY wechselweise zusenden. Dabei handeln die Taktgebermodule GEN1, GEN2 zudem aus, welches der beiden Module als Master-Taktgebermodul und welches als Slave-Taktgebermodul arbeitet. Dementsprechend setzen die Taktgebermodule GEN1, GEN2 die Master-Slave-Statusinformationen MSX in den Taktsignalen TS1, TS2 auf die Werte "Master" bzw. "Slave", z.B. logisch "1" bzw. "0". Vorliegend sind exemplarisch in Rahmen FRTS1a, FRTS1da der Taktsignale TS1, TS1d die Master-Slave-Statusinformationen MSX eingezeichnet.

Die Taktgebermodule GEN1, GEN2 senden die Taktsignale TS1, TS2 über Verbindungen VM11, VM12; VM21, VM22 an die Kompensationsmodule MOD1, MOD2. Das Kompensationsmodul MOD1 empfängt die Taktsignale TS1, TS2 an Eingängen oder Ports P11 bzw. P12, die Empfangsmittel bilden und z.B. integrierte Schaltkreise zum Datenempfang nach der RS485-Schnittstellendefinition enthalten. Entsprechend empfängt das Kompensationsmodul MOD2 die Taktsignale TS1, TS2 über Eingänge oder Ports P21 bzw. P22.

In Abhängigkeit davon, in welchem der Taktsignale TS1 oder TS2 die Master-Slave-Statusinformation MSX auf "Master" gesetzt ist, wählen die Kompensationsmodule MOD1, MOD2 das Taktsignal TS1 oder das Taktsignal TS2 als Master-Synchronisationssignal aus und synchronisieren sich auf dieses. Prinzipiell ist es jedoch auch möglich, dass die Kompensationsmodule MOD1, MOD2 gemäß einer festen Vorbestimmung oder anhand sonstiger Kriterien oder auch zufällig eines des Taktsignale TS1, TS2 als Master-Synchronisationssignal auswählen. Beispielsweise könnte das jeweils in der Phase vorauseilende Taktsignal TS1, TS2 als Master-Synchronisationssignal ausgewählt werden.

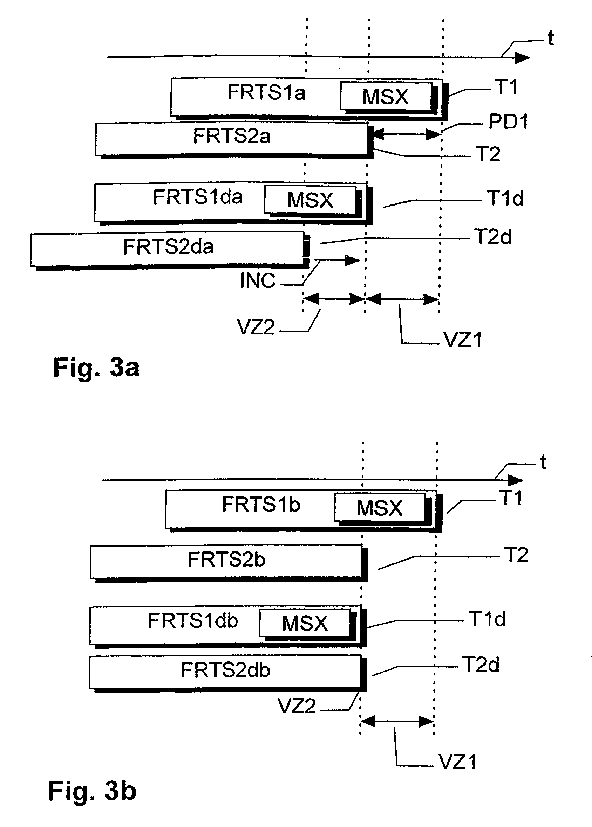

Ein möglicher Ablauf einer erfindungsgemäßen Phasenkompensation durch die Kompensationsmodule MOD1, MOD2 wird nachfolgend anhand der Figuren 3a, 3b erläutert.

Parallel zu einer Zeitachse t sind den Taktsignalen TS1, TS2 zugeordnete Rahmen FRTS1a bzw. FRTS2a eingezeichnet, die zu Zeitpunkten T1a bzw. T2a bei dem Kompensationsmodul MOD1 ankommen. Das Taktsignal TS1 ist demnach gegenüber dem Taktsignal TS2 um eine Phasendifferenz-Zeitdauer PD1 vorauseilend, beispielsweise weil der Übertragungsweg VM11 kürzer als der Übertragungsweg VM21 ist. Das Kompensationsmodul MOD1 verzögert das Taktsignal TS1 um eine der Phasendifferenz-Zeitdauer PD1 entsprechende Verzögerungsdauer VZ1, das Taktsignal TS2 um eine Verzögerungsdauer VZ2, die vorliegend kleiner ist als die Verzögerungsdauer VZ1, prinzipiell aber auch gleich oder größer sein kann. Die zeitlich verzögerten Taktsignale TS1d, TS2d sind als Rahmen FRTS1da bzw. FRTS2da gezeigt. Das Taktsignal TS2 bzw. der Rahmen FRTS2da muss zur Verringerung der Verzögerungsdauer VZ1 entsprechenden Phasendifferenz PD1 zeitlich nach vorn verschoben werden, was durch einen Pfeil INC angedeutet ist.

Das Ergebnis einer solchen zeitlichen Anpassung ist in Figur 3b gezeigt. Eingangsseitig kommen bei dem Kompensationsmodul MOD1 den Rahmen FRTS1a bzw. FRTS2a nachfolgende Rahmen FRTS1db bzw. FRTS2db an. Nach wie vor wird das Taktsignal TS1 um die Verzögerungsdauer VZ1 verzögert. Im Unterschied zu der Situation in Figur 3a ist die Verzögerungsdauer VZ2 bis auf "0" verringert, so dass das die zeitlich verzögerten Taktsignale TS1d, TS2d gleichphasig sind, in Figur 3b gezeigt durch Rahmen FRTS1db bzw. FRTS2db.

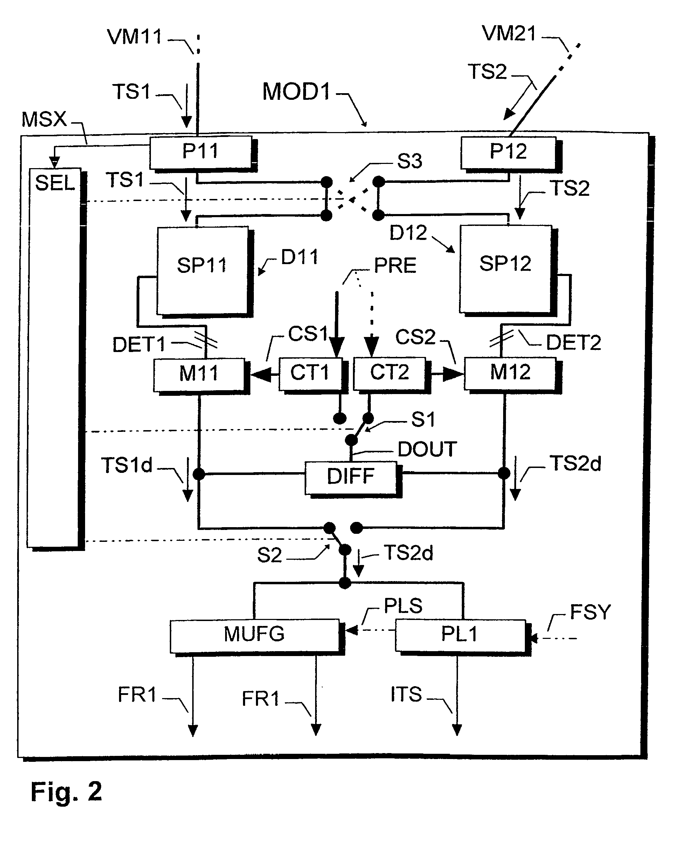

Im Folgenden wird eine mögliche Ausführungsform eines erfindungsgemäßen Kompensationsmoduls anhand des in Figur 2 schematisch gezeigten Kompensationsmoduls MOD1 erläutert. Das Kompensationsmodul MOD2 ist aus funktionaler Sicht gleich aufgebaut und wird daher nicht näher beschrieben. Die gezeigten Komponenten des Kompensationsmoduls MOD 1 können in Hardware aufgebaut sein, beispielsweise mittels eines oder mehrerer integrierter Schaltkreise. Beispielsweise kann das Kompensationsmodul MOD1 ganz oder teilweise z.B. als sogenannter Field Programmable Gate Array (FPGA) und/oder als Application Specific Integrated Circuit (ASIC) ausgeführt sein. Das Kompensationsmodul MOD1 kann auch als eine Software in Form eines Programm-Moduls realisiert sein, dessen Programmcode z.B. von einem Steuerungs-Prozessor einer Schaltmatrix oder einer sonstigen Prozessoranordnung ausgeführt werden kann.

Ausgehend von den Ports P11 und P12 werden die Taktsignale TS1, TS2 Verzögerungsmitteln D11, D12 zugeführt, die zum Ausgleich von zwischen den Taktsignalen TS1, TS2 auftretenden Phasendifferenzen vorgesehen sind. Die Verzögerungsmittel umfassen z.B. als Schieberegister ausgeführte Speicher SP11, SP12 sowie Multiplexer M11, M12 zur Abtastung von deren Speicherzellen über Verbindungen DET1, DET2. Den Multiplexern M11, M12 sind durch Steuerwerte CS1, CS2 Abtaststellen und/oder Startwerte für die Abtastung der Speicher SP11,

SP12 vorgebbar. Ausgangsseitig geben die Multiplexer M11, M12 die Taktsignale TS1, TS2 als verzögerte Taktsignale TS1d, TS2d aus.

Die Taktsignale TS1d, TS2d dienen zur Synchronisation eines Mehrfach-Rahmen-Generators MUFG, der aus den Taktsignalen TS1d oder TS2d beispielsweise einen Rahmentakt FR1 mit einer Frequenz 1 Herz und einen Rahmentakt FR2 mit einer Frequenz von 8 Kiloherz generiert. Vorliegend ist das als Master-Synchronisationssignal dienende Taktsignal TS1 mittels eines durch einen Umschalter SEL betätigten Schalters S2 auf den Mehrfach-Rahmen-Generator MUFG geschaltet. Zudem ist das Master-Synchronisationssignal TS1 auf einen z.B. als sogenannter Phase Locked Loop (PLL) gestalteten Taktgeber PL1 geschaltet. Der Taktgeber PL1 gibt einen hochfrequenten Takt ITS, z.B. mit 622 Megaherz, aus und synchronisiert zudem mit einem Synchronisationssignal PLS den Mehrfach-Rahmen-Generator MUFG. Es ist auch möglich, dass eine Feinsynchronisation des Taktgebers PL1 mit einem oder mehreren nicht gezeigten zusätzlichen, den Taktsignalen TS1, TS2 zugeordneten Taktsignalen vorgesehen ist, beispielsweise mit einem für die SDH-Technik typischen Taktsignal von 2,43 Megaherz.

Idealerweise sind die von dem Mehrfach-Rahmen-Generator MUFG gebildeten Rahmentakte FR1, FR2 im Wesentlichen synchron zum jeweils ausgewählten Taktsignal TS1d oder TS2d. Es ist auch möglich, dass die Rahmentakte FR1, FR2 innerhalb vorbestimmter Toleranzgrenzen von den Taktsignalen TS1d, TS2d abweichen dürfen. Ist eine solche Toleranzgrenze überschritten, synchronisiert sich der Mehrfach-Rahmen-Generator MUFG wieder von selbst neu oder erhält einen externen, beispielsweise von dem Taktgeber PL1 gegebenen Rücksetz- oder Neusynchronisations-Befehl.

In der vorliegenden Ausführungsform der Kompensationsmodule MOD1, MOD2 können die Taktsignale TS1, TS2 mittels eines Wechselschalters S3 wechselweise auf die Verzögerungsmittel D11, D12 aufgeschaltet werden. Der Wechselschalter S3 kann als Hardware- oder Software-Schalter ausgestaltet sein. In der gezeigten Schalterstellung des Wechselschalters S3 sind das Taktsignal TS1 auf das Verzögerungsmittel D11 und das Taktsignal TS2 auf das Verzögerungsmittel D12 geschaltet, in einer mit gestrichelten Linien angedeuteten Schalterstellung umgekehrt. Der Wechselschalter S3 wird vom Umschalter SEL gesteuert, der ein Auswahlmittel bildet und der die Schalterstellung entsprechend der Master-Slave-Statusinformation MSX in den Taktsignalen TS1, TS2 einstellt. Die Master-Slave-Statusinformation MSX wird von den Ports P11, P12 ermittelt und dem Umschalter SEL zugeführt. Entsprechend der Master-Slave-Statusinformation MSX ist das Taktsignal TS1 vorliegend als das Master-Synchronisationssignal und dementsprechend auf das Verzögerungsmittel D11 geschaltet.

Prinzipiell könnte der Umschalter SEL die Aufschaltung auch nach anderen Kriterien vornehmen, beispielsweise könnte das jeweils in der Phase voreilende Taktsignal TS1, TS2 auf das Verzögerungsmittel D11 und das nachlaufende Taktsignal der Taktsignale TS1, TS2 auf das Verzögerungsmittel D12 geschaltet werden. Somit müsste beispielsweise der Speicher SP11 nur die halbe Speichertiefe des Speichers SP12 aufweisen. In vorliegenden Anordnung sind beide Speicher SP11, SP12 gleich groß, so dass der Wechselschalter S3 nicht unbedingt erforderlich ist.

Die verzögerten Taktsignale TS1d, TS2d werden einem Phasenvergleicher DIFF zugeführt, der die jeweilige Phasendifferenz zwischen den Taktsignalen TS1d, TS2d ermittelt und als Steuersignal DOUT ausgibt. Dieses wird in Abhängigkeit der jeweiligen Stellung eines Schalters S1 einem Zähler CT1 oder einem Zähler CT2 zugeführt, die als Abtaststeuerungsmittel dienen und als umlaufende, durch ein nicht gezeigtes Abtasttaktsignal getaktete Zähler ausgebildet sind. Insgesamt bilden der Phasenvergleicher DIFF sowie die Zähler CT1, CT2 Justiermittel, die im Zusammenwirken mit den Verzögerungsmitteln D11, D12 eine Phasendifferenz zwischen den Taktsignalen TS1d, TS2d kompensieren können.

In der gezeigten Stellung des Schalters S1 liegt das Steuersignal DOUT an dem Zähler CT2 an, der über den Multiplexer M12 die Abtastung des nicht ausgewählten, als Slave-Synchronisationssignal dienenden Taktsignals TS2 steuert.

Der Zähler CT1 hingegen steuert über den Multiplexer M11 die Abtastung des ausgewählten, als Master-Synchronisationssignal dienenden Taktsignals TS1. Der Zähler CT1 erhält einen Vorgabewert PRE als Startwert für die Abtastung des Speichers SP11. Der Vorgabewert PRE könnte auch auf den Zähler CT2 geschaltet werden (gestrichelt eingezeichnet), wenn beispielsweise das Taktsignal TS2 als das "ausgewählte" Master-Synchronisationssignal dient und der Schalter S1 in die nicht gezeigte Stellung umgeschaltet ist.

Das Abtasttaktsignal weist beispielsweise eine Frequenz von 78 Megaherz auf und eine Abtastperiode TA beträgt demnach 12,86 Nanosekunden und wird z.B. auf 13 Nanosekunden aufgerundet. Geht man beispielsweise von einer Signallaufzeit für die Taktsignale TS1, TS2 von 5 Nanosekunden pro Meter aus und für Übertragungswege VM11, VM21 von einer minimalen Länge von nahezu 0 Metern und einer maximalen Länge von 200 Metern, so lautet der Vorgabewert PRE beispielsweise 78 für einen z.B. mit 156 Speicherzellen ausgeführten Speicher SP11. Dabei wird der Vorgabewert PRE in Abhängigkeit von der dem (ersten) Taktsignal TS1 zugeordneten (ersten) Verzögerungsdauer VZ1 sowie der Speichertiefe des Speichers SP11 eingestellt.

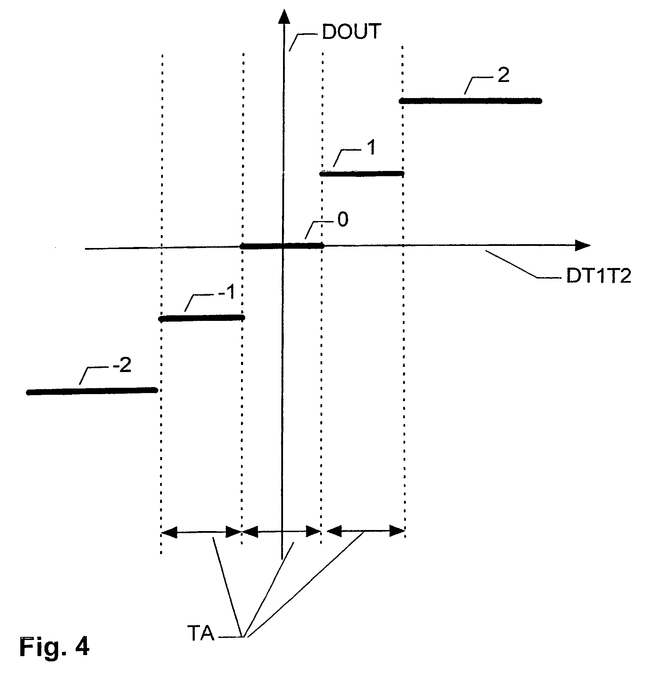

Bei dem vorliegend auf den Zähler CT2 geschalteten Vorgabewert DOUT handelt es sich um einen den Zähler CT2 schrittweise vorwärts oder rückwärts schaltenden Inkrement- bzw. Dekrementwert, für den mögliche Werte in Figur 4 gezeigt sind. Dort sind über einer horizontalen Achse DT1T2 die als Eingangswerte für den Phasenvergleicher DIFF dienenden Phasendifferenzen zwischen den verzögerten Taktsignalen TS1d, TS2d eingezeichnet.

Sofern die Taktsignale TS1d, TS2d lediglich geringfügig phasenverschoben sind, vorliegend um jeweils eine Abtastperiode TA, lautet der Vorgabewert DOUT "0" oder "nicht abweichend". Bei einer größeren Phasenverschiebung, z.B. zwei Abtastperioden TA, lautet der Vorgabewert DOUT "-1" oder "+1", je nach dem ob das Taktsignal TS1d dem Taktsignal TS2d vorauseilt oder umgekehrt. Ist die Phasenverschiebung noch größer, beispielsweise drei und mehr Abtastperioden TA, lautet der Vorgabewert DOUT "-2" oder "+2" oder "weit vorauseilend" oder "weit nachlaufend". Prinzipiell könnte der Vorgabewert DOUT auch weniger oder noch mehr Werte aufweisen.

Jedenfalls stehen die Taktsignale TS1d, TS2d nach der Phasenjustierung des Verzögerungsmittels D12 gleichphasig an dem Schalter S2 an, so dass dieser bei Ausfall oder Störung des Taktsignals TS1 ohne Weiteres auf das Taktsignal TS2d durch den als Auswahlmittel dienenden Umschalter SEL umgeschaltet werden könnte.

Zweckmäßigerweise wird der Wechselschalter S3 nur in der Hochlaufphase der Netzwerkeinrichtung NWE und/oder der Kompensationsmodule MOD1, MOD2 geschaltet, während die Schalter S1, S2 auch im laufenden Betrieb betätigt werden können.

Die Schalter S1, S2 werden vorteilhafterweise synchron geschaltet. Der Wechselschalter S3 hingegen kann asynchron zu den Schaltern S1, S2 geschaltet werden.

Durch gleichsinniges Schalten des Wechselschalters S3 synchronisieren sich beide Kompensationsmodule MOD1, MOD2 auf dasselbe Taktsignal TS1 oder TS2.

Bei der vorliegenden Anordnung ist zwar vorgesehen, dass im Normalbetrieb nur eines der Taktgebermodule GEN1, GEN2 ein jeweils als Master-Synchronisationssignal dienendes Taktsignal TS1, TS2 versendet und das jeweils andere lediglich ein als Standby- oder Slave-Synchronisationssignal dienendes Taktsignal TS1, TS2. Wenn jedoch eine Störung auftritt, beispielsweise wegen Ausfalls der Verbindung VSY oder eines der Taktgebermodule GEN1, GEN2, werden die Synchronisationsdaten SY nicht mehr von beiden Taktgebermodulen GEN1, GEN2 korrekt empfangen. In diesem Fall geht oder gehen das oder die störungsfrei arbeitenden Taktgebermodule GEN1, GEN2 sozusagen automatisch in den Master-Modus über und setzen die Master-Slave-Statusinformationen MSX in den Taktsignalen TS1, TS2 auf die Werte "Master".

Wenn die Kompensationsmodule MOD1, MOD2 die Taktsignale TS1, TS2 jeweils auf ihren beiden Ports P11, P12; P21, P22 mit einer auf "Master" gesetzten Master-Slave-Statusinformationen MSX empfangen, kann es vorbestimmt sein, dass sie z.B. das Taktsignal TS1 als Master-Synchronisationssignal auswählen. Es ist auch möglich, dass auch dann, wenn beide Taktsignale TS1, TS2 zugleich auf "Slave" stehen, z.B. das Taktsignal TS2 von den Kompensationsmodulen MOD1, MOD2 als Master-Synchronisationssignal auszuwählen ist.

Weitere Varianten der Erfindung sind ohne Weiteres möglich:

Anstatt der justierbare Schieberegister enthaltenden Verzögerungsmittel D11, D12 könnten auch andersartig ausgestaltete Verzögerungsmittel vorgesehen sein, beispielsweise geeignet aufgebaute und/oder programmierte Logikschaltungen, so dass gegebenenfalls ein geringerer Bedarf an Speicherzellen notwendig ist.

Man könnte auch bereits eingangsseitig an den Kompensationsmodulen MOD1,

MOD2 die jeweiligen Phasendifferenzen zwischen den Taktsignalen TS1, TS2 ermitteln und zur Justierung der Verzögerungsmittel D11, D12 auswerten.

Es versteht sich, dass die Taktsignale TS1, TS2 auch weitere Nutzinformationen umfassen können, beispielsweise weitere Qualitätskennungen und/oder Uhrzeit-und/oder Datumsinformationen. Prinzipiell könnten die Taktsignale TS1, TS2 auch aber auch einfacher aufgebaut sein, beispielsweise als einfache Pulse, in denen gegebenenfalls eine Master-Slave-Statusinformation enthalten ist.

Ferner könnten auch weitere Kompensationsmodule vorgesehen sein.

Die Kompensationsmodule MOD1, MOD2 könnten jeweils in separaten, örtlich voneinander getrennten Netzwerkeinrichtungen angeordnet sein, beispielsweise jeweils in SDH-Cross-Connects oder sonstigen Computersystemen.

In einer weiteren Konstellation könnten die Kompensationsmodule MOD1, MOD2 unmittelbar mit den externen Taktsignalen TEX1, TEX2 versorgt werden, die möglicherweise gegebenenfalls eine Master-Slave-Statusinformation enthielten.

Es versteht sich, dass auch beliebige Kombinationen der in den Ansprüchen sowie in der Beschreibung angegebenen Maßnahmen und Anordnungen möglich sind.

## Patentansprüche

1. Kompensationsmodul (MOD1, MOD2) zur Phasenkompensation von Taktsignalen, das Empfangsmittel (P11, P12; P21, P22) zum Empfangen zumindest eines ersten Taktsignals (TS1) und eines zweiten Taktsignals (TS2) aufweist, wobei das Kompensationsmodul (MOD1, MOD2) zweite Verzögerungsmittel (D12) zur Verzögerung des zweiten Taktsignals (TS2) um eine zweite Verzögerungsdauer (VZ2) aufweist, und wobei das Kompensationsmodul (MOD1, MOD2) Justiermittel (DI FF, CT1, CT2) zur Phasenjustierung der zweiten Verzögerungsmittel (D12) aufweist, so dass das ausgangseitig an den zweiten Verzögerungsmitteln (D12) anstehende verzögerte zweite Taktsignal (TS2d) an die Phase mindestens einen ersten Taktsignals (TS1d) angepasst ist, **dadurch gekennzeichnet, dass** das Kompensationsmodul (MOD1, MOD2) erste Verzögerungsmittel (D11) zur Verzögerung des mindestens einen ersten Taktsignals (TS1) um eine erste Verzögerungsdauer (VZ1) aufweist, dass die Justiermittel (DIFF, CT1, CT2) zur Anpassung des ausgangseitig an den zweiten Verzögerungsmitteln (D12) anstehenden verzögerten zweiten Taktsignals (TS2d) an die Phase des ausgangseitig an den ersten Verzögerungsmitteln (D11) anstehenden, verzögerten mindestens einen ersten Taktsignals (TS 1 d) ausgestaltet sind, und dass die erste Verzögerungsdauer (VZ1) und/oder ein Startwert für die zweite Verzögerungsdauer (VZ2) in Abhängigkeit von einer maximal zu erwartenden Phasendifferenz (PD1) zwischen dem zumindest einen ersten Taktsignal (TS1) und dem zweiten Taktsignal (TS2) und/oder in Abhängigkeit von einer maximal zu erwartenden Laufzeitdifferenz vorbestimmt sind, die durch für die Übertragung des mindestens einen ersten Taktsignals (TS1) und des zweiten Taktsignals (TS2) verwendete, jeweils unterschiedlich lange Übertragungswege (VM11, VM12, VM22, VM21) bedingt ist.

2. Kompensationsmodul (MOD1, MOD2) nach Anspruch 1, **dadurch gekennzeichnet, dass** die ersten Verzögerungsmittel (D11) derart bemessen sind, dass sie das mindestens eine erste Taktsignal (TS1) um zumindest eine solche erste Verzögerungsdauer (VZ1) verzögern können, die einer maximal zu erwartenden Phasendifferenz (PD1) und/oder die einer maximal zu erwartenden Laufzeitdifferenz zwischen dem mindestens einen ersten Taktsignal (TS1) und dem zweiten Taktsignal (TS2) entspricht, die durch für die Übertragung des mindestens einen ersten Taktsignals (TS1) und des zweiten Taktsignals (TS2) verwendete, jeweils unterschiedlich lange Übertragungswege (VM11, VM12, VM22, VM21) bedingt ist.

3. Kompensationsmodul (MOD1, MOD2) nach Anspruch 1, **dadurch gekennzeichnet, dass** die zweiten Verzögerungsmittel (D12) derart bemessen sind, dass sie das mindestens eine zweite Taktsignal (TS2) um zumindest eine solche zweite Verzögerungsdauer (VZ2) verzögern können, die einer doppelten maximal zu erwartenden Phasendifferenz und/oder die einer doppelten maximal zu erwartenden Laufzeitdifferenz zwischen dem mindestens einen ersten Taktsignal (TS1) und dem zweiten Taktsignal (TS2) entspricht, die durch für die Übertragung des mindestens einen ersten Taktsignals (TS1) und des zweiten Taktsignals (TS2) verwendete, jeweils unterschiedlich lange Übertragungswege (VM11, VM22) bedingt ist.

4. Kompensationsmodul (MOD1, MOD2) nach Anspruch 1, **dadurch gekennzeichnet, dass** es Auswahlmittel (SEL) zur Auswahl des mindestens einen ersten verzögerten Taktsignals (TS1d) oder des zweiten verzögerten Taktsignals (TS2d) und/oder des mindestens einen ersten Taktsignals (TS1) oder des zweiten Taktsignals (TS2) aufweist, wobei das jeweils ausgewählte mindestens eine erste verzögerte Taktsignal (TS1d) oder zweite verzögerte Taktsignal (TS2d) und/oder mindestens eine erste Taktsignal (TS1) oder zweite Taktsignal (TS2) insbesondere zur Synchronisierung des Kompensationsmoduls (MOD1, MOD2) dient.

5. Kompensationsmodul (MOD1, MOD2) nach Anspruch 4, **dadurch gekennzeichnet, dass** die Auswahlmittel (SEL) zur Auswahl desjenigen des mindestens einen ersten Taktsignals (TS1) oder des zweiten Taktsignals (TS2) zur Verzögerung in den ersten Verzögerungsmitteln (D11) ausgestaltet sind, das durch eine Master-Slave-Statusinformation (MSX) als ein Master-Synchronisationssignal **gekennzeichnet** ist oder das in der Phase dem jeweils anderen ersten oder zweiten Taktsignal (TS1, TS2) vorauseilend ist.

6. Kompensationsmodul (MOD1, MOD2) nach Anspruch 4, **dadurch gekennzeichnet, dass** die Auswahlmittel (SEL) zur Auswahl des mindestens einen ersten verzögerten Taktsignals (TS1d) oder des zweiten verzögerten Taktsignals (TS2d) während des laufenden Betriebs des Kompensationsmoduls (MOD1, MOD2) ausgestaltet sind.

7. Kompensationsmodul (MOD1, MOD2) nach Anspruch 1, **dadurch gekennzeichnet, dass** die Justiermittel (DIFF, CT1, CT2) zur Phasenjustierung der ersten Verzögerungsmittel (D11) ausgestaltet sind, so dass insbesondere bei einer Auswahl des ersten verzögerten Taktsignals (TS1d) anstelle des zweiten verzögerten Taktsignals (TS2d) das ausgangseitig an den ersten Verzögerungsmitteln (D11) anstehende verzögerte erste Taktsignal (TS1d) an die Phase des ausgangseitig an den zweiten Verzögerungsmitteln (D12) anstehenden, verzögerten zweiten Taktsignals (TS2d) angepasst ist.

8. Kompensationsmodul (MOD1, MOD2) nach Anspruch 1, **dadurch gekennzeichnet, dass** die Justiermittel (DIFF, CT1, CT2) zu einer bevorzugten Einstellung der ersten Verzögerungsdauer (VZ1) und/oder der zweiten Verzögerungsdauer (VZ2) auf einen vorbestimmten und/oder jeweils bei einem Anlauf des Kompensationsmoduls (MOD1, MOD2) ermittelten ersten bzw. zweiten Startwert ausgestaltet sind, wobei eine die Abweichung der ersten Verzögerungsdauer (VZ1) bzw. der zweiten Verzögerungsdauer (VZ2) von ersten bzw. zweiten Startwert vergrößernde Modifikation der ersten Verzögerungsdauer (VZ1) bzw. der zweiten Verzögerungsdauer (VZ2) erst bei Erreichen eines vorbestimmten ersten Abweichungstoleranzwertes durchgeführt wird, in umgekehrter Richtung bei Erreichen eines zweiten, im Vergleich zu dem ersten Abweichungstoleranzwert kleineren Abweichungstoleranzwertes.

9. Kompensationsmodul (MOD1, MOD2) nach Anspruch 1, **dadurch gekennzeichnet, dass** die Justiermittel (DIFF, CT1, CT2) derart ausgestaltet sind, dass sie zur Phasenjustierung die zweite Verzögerungsdauer (VZ2) schrittweise ändern.

10. Kompensationsmodul (MOD1, MOD2) nach Anspruch 1, **dadurch gekennzeichnet, dass** die Justiermittel (DIFF, CT1, CT2) derart ausgestaltet sind, dass sie zur Phasenjustierung die zweite Verzögerungsdauer (VZ2) der zweiten Verzögerungsmittel (D12) in dynamischen Schrittweiten ändern, wobei die jeweilige Schrittweite in Abhängigkeit von einer jeweiligen Phasendifferenz zwischen dem ausgangseitig an den zweiten Verzögerungsmitteln (D12) anstehenden verzögerten zweiten Taktsignal (TS2d) und dem ausgangseitig an den ersten Verzögerungsmitteln (D11) anstehenden, verzögerten ersten Taktsignal (TS1d) modifiziert wird.

11. Kompensationsmodul (MOD1, MOD2) nach Anspruch 1, **dadurch gekennzeichnet, dass** es Programmcode enthält, der von einem Steuermittel einer Netzwerkeinrichtung, insbesondere von einem Steuermittel auf einem Board einer Netzwerkeinrichtung für ein Übertragungsnetzwerk mit synchroner digitaler Hierarchie (SDH), ausgeführt werden kann.

12. Knoten für ein Telekommunicationsnetz, insbesondere für ein Übertragungsnetzwerk mit synchroner digitaler Hierarchie (SDH), mit zumindest einem Kompensationsmodul (MOD1, MOD2) nach Anspruch

13. Verfahren zur Phasenkompensation zwischen mindestens einem ersten Taktsignal (TS1) und ein zweiten Taktsignal (TS2), die einem Kompensationsmodul (MOD1, MOD2) einer Netzwerkeinrichtung eines Telekommunikationsnetzes übermittelt werden, wobei das Kompensationsmodul (MOD1, MOD2) das zweite Taktsignal (TS2) um eine vorbestimmte zweite Verzögerungsdauer (VZ2) zu einem verzögerten zweiten Taktsignal (TS2d) verzögert, und dass das Kompensationsmodul (MOD1, MOD2) die zweite Verzögerungsdauer (VZ2) derart modifiziert, dass das verzögerte zweite Taktsignal (TS2d) an die Phase des mindestens einen ersten Taktsignals (TS1d) angepasst ist, **dadurch gekennzeichnet, dass** das Kompensationsmodul (MOD1, MOD2) das mindestens eine erste Taktsignal (TS1) um eine vorbestimmte erste Verzögerungsdauer (VZ1) zu einem verzögerten ersten Taktsignal (TS1d) verzögert, dass das Kompensationsmodul (MOD1, MOD2) das verzögerte zweite Taktsignal (TS2d) an die Phase des ausgangseitig an den ersten Verzögerungsmitteln (D11) anstehenden, verzögerten mindestens einen ersten Taktsignals (TS1d) anpasst, und dass die erste Verzögerungsdauer (VZ1) und/oder ein Startwert für die zweite Verzögerungsdauer (VZ2) in Abhängigkeit von einer maximal zu erwartenden Phasendifferenz (PD1) zwischen dem zumindest einen ersten Taktsignal (TS1) und dem zweiten Taktsignal (TS2) und/oder in Abhängigkeit von einer maximal zu erwartenden Laufzeitdifferenz vorbestimmt sind, die durch für die Übertragung des mindestens einen ersten Taktsignals (TS1) und des zweiten Taktsignals (TS2) verwendete, jeweils unterschiedlich lange Übertragungswege (VM11, VM12, VM22, VM21) bedingt ist.

## Claims

1. Compensation module (MOD1, MOD2) for the phase compensation of clock signals having receiving means (P11, P12; P21, P22) for receiving at least one first clock signal (TS1) and a second clock signal (TS2), wherein the compensation module (MOD1, MOD2) has second delay means (D12) for delaying the second clock signal (TS2) by a second delay time (VZ2) and wherein the compensation module (MOD1, MOD2) has adjusting means (DIFF, CT1, CT2) for the phase adjustment of the second delay means (D12) so that the delayed second clock signal (TS2d), waiting at the output end of the second delay means (D12), is adapted to the phase of at least one first clock signal (TS1d), **characterised in that** the compensation module (MOD1, MOD2) has means (D11) for delaying the at least one first clock signal (TS1) by a first delay time (VZ1), **in that** the adjusting means (DIFF, CT1, CT2) are configured to adapt the delayed second clock signal (TS2d) waiting at the output end of the second delay means (D12) to the phase of the delayed at least one first clock signal (TS1d) waiting at the output end of the first delay means (D11) and **in that** the first delay time (VZ1) and/or a start value for the second delay time (VZ2) are predetermined as a function of a maximum expected phase difference (PD1) between the at least one first clock signal (TS1) and the second clock signal (TS2) and/or as a function of a maximum expected propagation time difference, caused by transmission paths (VM11, VM12, VM22, VM21) of different lengths in each case, used for transmitting the at least one first clock signal (TS1) and the second clock signal (TS2).

2. Compensation module (MOD1, MOD2) according to Claim 1, **characterised in that** the first delay means (D11) are designed such that they can delay the at least one first clock signal (TS1) by at least a first delay time (VZ1) which is such that it corresponds to a maximum expected phase difference (PD1) and/or a maximum expected propagation time difference between the at least one first clock signal (TS1) and the second clock signal (TS2), which difference is caused by transmission paths (VM11, VM12, VM22, VM21) of different length in each case used for the transmission of the at least one first clock signal (TS1) and the second clock signal (TS2).

3. Compensation module (MOD1, MOD2) according to Claim 1, **characterised in that** the second delay means (D12) are designed such that they can delay the at least one second clock signal (TS2) by at least a second delay time (VZ2) which is such that it corresponds to double a maximum expected phase difference and/or double a maximum expected propagation time difference between the at least one first clock signal (TS1) and the second clock signal (TS2), which difference is caused by transmission paths (VM11, VM22) of different length in each case used for the transmission of the at least one first clock signal (TS1) and the second clock signal (TS2).

4. Compensation module (MOD1, MOD2) according to Claim 1, **characterised in that** it has selection means (SEL) for selecting the at least one first delayed clock signal (TS1d) or the second delayed clock signal (TS2d) and/or the at least one first clock signal (TS1) or the second clock signal (TS2), wherein the respectively selected, at least one first delayed clock signal (TS1d) or second delayed clock signal (TS2d) and/or at least one first clock signal (TS1) or second clock signal (TS2) serves in particular to synchronise the compensation module (MOD1, MOD2).

5. Compensation module (MOD1, MOD2) according to Claim 4, **characterised in that** the selection means (SEL) are configured to select, for delay in the first delay means (D11), that one of the at least one first clock signal (TS1) or second clock signal (TS2) which is identified by an item of master-slave-status information (MSX) as a master synchronisation signal or which leads the respective other first or second clock signal (TS1, TS2) in phase.

6. Compensation module (MOD1, MOD2) according to Claim 4, **characterised in that** the selection means (SEL) are configured to select the at least one first delayed clock signal (TS1d) or the second delayed clock signal (TS2d) while the compensation module (MOD1, MOD2) is in operation.

7. Compensation module (MOD1, MOD2) according to Claim 1, **characterised in that** the adjusting means (DIFF, CT1, CT2) are configured to adjust the phase of the first delay means (D11) so that in particular when the first delayed clock signal (TS1d) is selected instead of the second delayed clock signal (TS2d), the delayed first clock signal (TS1d), waiting at the output end of the first delay means (D11), is adapted to the phase of the delayed second clock signal (TS2d) waiting at the output end of the second delay means (D12).

8. Compensation module (MOD1, MOD2) according to Claim 1, **characterised in that** the adjusting means (DIFF, CT1, CT2) are configured for preferential adjustment of the first delay time (VZ1) and/or second delay time (VZ2) to a first or second start value which is either predetermined and/or is determined upon each start-up of the compensation module (MOD1, MOD2), wherein a modification of the first delay time (VZ1) or second delay time (VZ2), which increases the deviation of the first delay time (VZ1) or second delay time (VZ2) from the first or second start value respectively, is performed only when a predetermined first deviation tolerance value has been reached, while the converse applies when a second deviation tolerance value has been reached which is smaller than the first deviation tolerance value.

9. Compensation module (MOD1, MOD2) according to Claim 1, **characterised in that** the adjusting means (DIFF, CT1, CT2) are configured such that, for the phase adjustment, they change the second delay time (VZ2) in stepped fashion.

10. Compensation module (MOD1, MOD2) according to Claim 1, **characterised in that** the adjusting means (DIFF, CT1, CT2) are configured such that, for the phase adjustment, they change the second delay time (VZ2) of the second delay means (D12) in dynamic step sizes, the respective step size being modified as a function of a respective phase difference between the delayed second clock signal (TS2d), waiting at the output end of the second delay means (D12), and the delayed first clock signal (TS1d) waiting at the output end of the first delay means (D11).

11. compensation module (MOD1, MOD2) according to Claim 1, **characterised in that** it contains a program code which can be executed by a control means of a network device, in particular by a control means on a console of a network device for a transmission network with synchronous digital hierarchy (SDH).

12. Node for a telecommunications network, in particular for a transmission network with synchronous digital hierarchy (SDH), with at least one compensation module (MOD1, MOD2) according to Claim 1.

13. Method of phase compensation between at least one first clock signal (TS1) and a second clock signal (TS2) which are transmitted to a compensation module (MOD1, MOD2) of a network device of a telecommunications network, wherein the compensation module (MOD1, MOD2) delays the second clock signal (TS2) by a predetermined second delay time (VZ2) to form a delayed second clock signal (TS2d), and in that the compensation module (MOD1, MOD2) modifies the second delay time (VZ2) such that the delayed second clock signal (TS2d) is adapted to the phase of the at least one first clock signal (TS1d), **characterised in that** the compensation module (MOD1, MOD2) delays the at least one first clock signal (TS1) by a predetermined first delay time (VZ1) to form a delayed first clock signal (TS1d), that the compensation module (MOD1, MOD2) adapts the delayed second clock signal (TS2d) to the phase of the delayed at least one first clock signal (TS1d) waiting at the output end of the first delay means (D11) and **in that** the first delay time (VZ1) and/or a start value for the second delay time (VZ2) are predetermined as a function of a maximum expected phase difference (PD1) between the at least one first clock signal (TS1) and the second clock signal (TS2) and/or as a function of a maximum expected propagation time difference caused by transmission paths (VM11, VM12, VM22, VM21), of different lengths in each case, used for the transmission of the at least one first clock signal (TS1) and the second clock signal (TS2).

## Revendications

1. Module de compensation (MOD1, MOD2) pour la compensation de phase de signaux d'horloge, lequel comprend des moyens de réception (P11, P12 ; P21, P22) pour la réception d'au moins un premier signal d'horloge (TS1) et d'un second signal d'horloge (TS2), sachant que le module de compensation (MOD1, MOD2) présente des seconds éléments retardateurs (D12) pour le retardement du second signal d'horloge (TS2) d'une seconde durée de retardement (VZ2), et que le module de compensation (MOD1, MOD2) présente des moyens d'ajustement (DIFF, CT1, CT2) pour l'ajustement de phase des seconds éléments retardateurs (D12), de telle manière que le second signal d'horloge retardé (TS2d) présent à la sortie des seconds éléments retardateurs (D12) est adapté à la phase d'au moins un premier signal d'horloge (TS1d), **caractérisé en ce que** le module de compensation (MOD 1, MOD2) présente des premiers éléments retardateurs (D11) pour le retardement d'au moins un premier signal d'horloge (TS1) d'une première durée de retardement (VZ1), que les moyens d'ajustement (DTFF, CT1, CT2) sont conçus pour ajuster le second signal d'horloge retardé (TS2d) présent à la sortie des seconds éléments retardateurs (D12) à la phase d'au moins un premier signal d'horloge retardé (TS1d) présent à la sortie des premiers éléments retardateurs (D11), et que la première durée de retardement (VZ1) et/ou une valeur de départ pour la seconde durée de retardement (VZ2) sont prédéterminées en fonction d'une différence de phase maximale attendue (PD1) entre le premier signal d'horloge (TS1) au moins en présence et le second signal d'horloge (TS2) et/ou en fonction d'une différence de durée de propagation maximale attendue qui est conditionnée par les chemins de transmission (VM11, VM12, VM22, VM21) respectivement de longueurs différentes, utilisés pour la transmission d'un premier signal d'horloge (TS1) au moins en présence et du second signal d'horloge (TS2).

2. Module de compensation (MOD1, MOD2) selon la revendication 1, **caractérisé en ce que** les premiers éléments retardateurs (D11) sont conçus de telle manière qu'ils peuvent retarder le premier signal d'horloge (TS1) au moins en présence d'au moins une première durée de retardement (VZ1) qui est telle qu'elle correspond à une différence de phase maximale attendue (PD1) et/ou à une différence de durée de propagation maximale attendue entre le premier signal d'horloge (TS1) au moins en présence et le second signal d'horloge (TS2), laquelle est conditionnée par les chemins de transmission (VM11, VM 12, VM22, VM21) respectivement de longueurs différentes, utilisés pour la transmission d'un premier signal d'horloge (TS1) au moins en présence et du second signal d'horloge (TS2).

3. Module de compensation (MOD1, MOD2) selon la revendication 1, **caractérisé en ce que** les seconds éléments retardateurs (D12) sont conçus de telle manière qu'ils peuvent retarder le second signal d'horloge (TS2) au moins en présence d'au moins une seconde durée de retardement (VZ2) qui est telle qu'elle correspond au double d'une différence de phase maximale attendue et/ou au double d'une différence de durée de propagation maximale attendue entre le premier signal d'horloge (TS1) au moins en présence et le second signal d'horloge (TS2), laquelle est conditionnée par les chemins de transmission (VM11, VM12, VM21, VM22) respectivement de longueurs différentes, utilisés pour la transmission d'un premier signal d'horloge (TS1) au moins en présence et du second signal d'horloge (TS2).

4. Module de compensation (MOD1, MOD2) selon la revendication 1, **caractérisé en ce qu'**il présente des moyens de sélection (SEL) pour la sélection d'un premier signal d'horloge retardé (TS1d) au moins en présence ou du second signal d'horloge retardé (TS2d) et/ou d'un premier signal d'horloge (TS1) au moins en présence ou du second signal d'horloge (TS2), sachant que le premier signal d'horloge retardé (TS1d) au moins en présence ou le second signal d'horloge retardé (TS2d) et/ou le premier signal d'horloge (TS1) au moins en présence ou le second signal d'horloge (TS2) respectivement sélectionné sert en particulier à la synchronisation du module de compensation (MOD1, MOD2).

5. Module de compensation (MOD1, MOD2) selon la revendication 4, **caractérisé en ce que** les moyens de sélection (SEL) sont conçus pour sélectionner, pour le retardement dans les premiers éléments retardateurs (D11), parmi au moins un premier signal d'horloge (TS1) et un second signal d'horloge (TS2), celui qui est désigné comme signal de synchronisation maître par une information de statut maître/esclave (MSX) ou celui qui, dans la phase, est en avance par rapport à l'autre premier ou second signal d'horloge (TS1, TS2) respectif.

6. Module de compensation (MOD1, MOD2) selon la revendication 4, **caractérisé en ce que** les moyens de sélection (SEL) sont conçus pour sélectionner le premier signal d'horloge retardé (TS1d) au moins en présence ou le second signal d'horloge retardé (TS2d) pendant que le module de compensation (MOD1, MOD2) est en fonctionnement.

7. Module de compensation (MOD1, MOD2) selon la revendication 1, **caractérisé en ce que** les moyens d'ajustement (DIFF, CT1, CT2) sont conçus pour ajuster les phases des premiers éléments retardateurs (D11), de telle façon que, en particulier lorsque le premier signal d'horloge retardé (T51d) est sélectionné à la place du second signal d'horloge retardé (TS2d), le premier signal d'horloge retardé (TS1d) présent à la sortie des premiers éléments retardateurs (D11) est adapté à la phase du second signal d'horloge retardé (TS2d) présent à la sortie des seconds éléments retardateurs (D12).

8. Module de compensation (MOD1, MOD2) selon la revendication 1, **caractérisé en ce que** les moyens d'ajustement (DTFF, CT1, CT2) sont conçus pour ajuster de préférence la première durée de retardement (VZ1) et/ou la seconde durée de retardement (VZ2) sur une première ou seconde valeur de départ prédéterminée et/ou déterminée respectivement lors du démarrage du module de compensation (MOD1, MOD2), sachant qu'une modification de la première durée de retardement (VZ1) ou de la seconde durée de retardement (VZ2), qui entraîne une plus grande déviation de la première durée de retardement (VZ1) ou de la seconde durée de retardement (VZ2) par rapport à respectivement la première ou la seconde valeur de départ, n'est réalisée que lorsqu'une première valeur de tolérance de déviation prédéterminée est atteinte, et dans l'autre direction, lorsqu'une seconde valeur de tolérance de déviation, plus petite que la première valeur de tolérance de déviation, est atteinte.

9. Module de compensation (MOD1, MOD2) selon la revendication 1, **caractérisé en ce que** les moyens d'ajustement (DIFF, CT1, CT2) sont conçus de telle manière qu'ils modifient par étapes, pour l'ajustement des phases, la seconde durée de retardement (VZ2).

10. Module de compensation (MOD1, MOD2) selon la revendication 1, **caractérisé en ce que** les moyens d'ajustement (DIFF, CT1, CT2) sont conçus de telle manière qu'ils modifient, pour l'ajustement des phases, la seconde durée de retardement (VZ2) des seconds éléments retardateurs (D12) par incréments dynamiques, sachant que les incréments dynamiques respectifs sont modifiés en fonction d'une différence de phase respective entre le second signal d'horloge retardé (TS2d) présent à la sortie des seconds éléments retardateurs (D12) et le premier signal d'horloge retardé (TS1d) présent à la sortie des premiers éléments retardateurs (D11).

11. Module de compensation (MOD1, MOD2) selon la revendication 1, **caractérisé en ce qu'**il contient le code de programmation qui peut être exécuté par un moyen de commande d'un dispositif de réseau, en particulier par un moyen de commande sur une carte d'un dispositif de réseau pour un réseau de transmission à hiérarchie numérique synchrone (SDH).

12. Noeud pour un réseau de télécommunication, en particulier pour un réseau de transmission à hiérarchie numérique synchrone (SDH), présentant au moins un module de compensation (MOD1, MOD2) selon la revendication 1.

13. Procédé pour la compensation de phase entre au moins un premier signal d'horloge (TS1) et un second signal d'horloge (TS2) qui sont transmis à un module de compensation (MOD1, MOD2) d'un dispositif de réseau d'un réseau de télécommunication, sachant que le module de compensation (MOD1, MOD2) retarde le second signal d'horloge (TS2) d'une seconde durée de retardement prédéterminée (VZ2) pour en faire un second signal d'horloge retardé (TS2d), et que le module de compensation (MOD1, MOD2) modifie la seconde durée de retardement (VZ2) de telle manière que le second signal d'horloge retardé (TS2d) est adapté à la phase d'un premier signal d'horloge (TS1d) au moins en présence, **caractérisé en ce que** le module de compensation (MOD1, MOD2) retarde le premier signal d'horloge (TS1) au moins en présence d'une première durée de retardement prédéterminée (VZ1) pour en faire un premier signal d'horloge retardé (TS1d), que le module de compensation (MOD1, MOD2) adapte le second signal d'horloge retardé (TS2d) à la phase du premier signal d'horloge retardé (TS1d) au moins en présence se trouvant à la sortie des premiers éléments retardateurs (D11), et que la première durée de retardement (VZ1) et/ou une valeur de départ pour la seconde durée de retardement (VZ2) sont prédéterminées en fonction d'une différence de phase maximale attendue (PD1) entre le premier signal d'horloge (TS1) au moins en présence et le second signal d'horloge (TS2) et/ou en fonction d'une différence de durée de propagation maximale attendue qui est conditionnée par les chemins de transmission (VM11 VM12, VM22, VM21) respectivement de longueurs différentes, utilisés pour la transmission d'un premier signal d'horloge (TS1) au moins en présence et du second signal d'horloge (TS2).
